(19) **Europäisches Patentamt**
**European Patent Office**
**Office européen des brevets**

(11) **EP 4 691 660 A1**

(12) **EUROPEAN PATENT APPLICATION**
published in accordance with Art. 153(4) EPC

(43) Date of publication:
**11.02.2026 Bulletin 2026/07**

(21) Application number: **24780538.5**

(22) Date of filing: **27.03.2024**

(51) International Patent Classification (IPC):
**B21B 45/02** (2006.01)     **B21B 1/26** (2006.01)
**B23K 7/06** (2006.01)      **B23P 23/04** (2006.01)
**C22C 38/00** (2006.01)     **C22C 38/16** (2006.01)

(52) Cooperative Patent Classification (CPC):
**B21B 1/26; B21B 45/02; B23K 7/06; B23P 23/04;
C22C 38/00; C22C 38/16**

(86) International application number:
**PCT/JP2024/012448**

(87) International publication number:
**WO 2024/204437 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023054365**

(71) Applicant: **NIPPON STEEL CORPORATION**
**Chiyoda-ku**
**Tokyo 100-8071 (JP)**

(72) Inventors:
• **NIITANI, Hiroshi**
**Tokyo 100-8071 (JP)**
• **AOKI, Toshikazu**
**Tokyo 100-8071 (JP)**
• **KIHARA, Yuki**
**Tokyo 100-8071 (JP)**

(74) Representative: **Vossius & Partner**
**Patentanwälte Rechtsanwälte mbB**
**Siebertstrasse 3**
**81675 München (DE)**

(54) **HOT ROLLING FACILITY AND HOT ROLLING METHOD**

(57)     Hot rolling equipment for hot rolling a steel material containing Cu, the hot rolling equipment including: a heating furnace that heats the steel material to a predetermined temperature after casting; a rough rolling apparatus including a plurality of rolling mills that rough roll on the steel material that has been heated in the heating furnace; a finish rolling apparatus that finish rolls on the steel material that has been rough rolled by the rough rolling apparatus; and a removal apparatus that removes a target region including cracks caused by a Cu-rich layer that is present at a surface side of the steel material that is being rough rolled or has been rough rolled and in which a concentration of Cu components is higher than a concentration of Cu components in a base material of the steel material, wherein the removal apparatus is provided downstream of a rolling mill located furthest upstream among the plurality of rolling mills in the rough rolling apparatus in a transport direction of the steel material and upstream of the finish rolling apparatus.

FIG.5

EP 4 691 660 A1

## Description

TECHNICAL FIELD

The present disclosure relates to hot rolling equipment and a hot rolling method.

BACKGROUND ART

JP-A No. H7-242938 describes a method of manufacturing a hot-rolled steel sheet with excellent workability, characterized by coiling, at 500 °C or lower after hot rolling, steel containing, by weight %, C: 0.01 to 0.20%, Si: 2.0% or less, Mn: 0.05 to 2.0%, and Ni: 0 to 0.50% and further containing, as tramp elements, Cu: 0.01 to 0.50%, Sn: 0.001 to 0.050%, Pb: 0.001 to 0.010%, and As: 0.001 to 0.050%.

Furthermore, JP-A No. H6-297026 describes a method of preventing hot cracks in Cu- and Sn-containing steel, characterized by adding Si as an alloy component to steel containing Cu and Sn, then heating the steel to yield scale, and then rolling the steel.

Furthermore, JP-A No. 2005-29886 describes a Cu-containing steel material, characterized in that a steel material containing Cu at 0.06 mass% or more contains any one or more of a solute concentration of any one or more of Ti, Nb, and V at 0.01 mass% to 0.15 mass%, a concentration of P at 0.01 mass% to 0.1 mass%, a REM concentration at 0.002 mass% to 0.15 mass%, and a concentration of S at 0.01 mass% to 0.05 mass%.

SUMMARY

Technical Problem

In recent years, iron sources other than iron ores have come to be utilized in order to reduce carbon dioxide emissions in the steel manufacturing process. For example, increasing the use ratio of scrap iron as an iron source is being considered.

However, when scrap iron is utilized as an iron source, surface defects caused by copper (Cu) included in the scrap iron may occur in the steel manufacturing stage. For example, in the hot rolling process, hot-shortness cracks caused by Cu concentrating in the surface of the steel material may occur, reducing the surface quality of the steel material. For this reason, it is difficult to increase the use ratio of scrap iron including Cu as an iron source, making it difficult to realize an environmentally friendly steel manufacturing process.

The techniques described in JP-A No. H7-242938, JP-A No. H6-297026, and JP-A No. 2005-29886 inhibit hot-shortness cracks by adding alloys to the steel material. In JP-A No. H7-242938, expensive Ni is added to the steel material, which increases costs.

Furthermore, in the technique described in JP-A No. H6-297026, Si is added to the steel material, which leads to a decrease in the workability of the steel material.

For that reason, in the technique described in JP-A No. H6-297026, the range of use of the steel material is limited, making it particularly difficult to use the steel material as an outer panel. Moreover, in the technique described in JP-A No. H6-297026, the steel material is processed in a temperature range equal to or higher than the normal hot rolling temperature, which reduces the productivity of the steel material.

Furthermore, in the technique described in JP-A No. 2005-29886, elements that affect material properties, such as Ti, V, and Nb, are added to the steel material. Moreover, in the technique described in JP-A No. 2005-29886, expensive REM is added to the steel material, which increases costs. In this way, the techniques described in JP-A No. H7-242938, JP-A No. H6-297026, and JP-A No. 2005-29886 have room for improvement.

Thus, it is an object of the present disclosure to provide hot rolling equipment and a hot rolling method that can inhibit hot-shortness cracks.

Solution to Problem

Hot rolling equipment pertaining to a first aspect is hot rolling equipment for hot rolling a steel material containing Cu, the hot rolling equipment including: a heating furnace that heats the steel material to a predetermined temperature after casting; a rough rolling apparatus including a plurality of rolling mills that rough roll the steel material that has been heated in the heating furnace; a finish rolling apparatus that finish rolls the steel material that has been rough rolled by the rough rolling apparatus; and a removal apparatus that removes a target region including cracks caused by a Cu-rich layer that is present at a surface side of the steel material that is being rough rolled or has been rough rolled and in which a concentration of Cu components is higher than a concentration of Cu components in a base material of the steel material, wherein the removal apparatus is provided downstream of a rolling mill located furthest upstream among the plurality of rolling mills in the rough rolling apparatus in a transport direction of the steel material and upstream of the finish rolling apparatus.

Hot rolling equipment pertaining to a second aspect is the hot rolling equipment pertaining to the first aspect, wherein the hot rolling equipment includes a post-removal descaling apparatus that is provided downstream of the removal apparatus and upstream of the finish rolling apparatus in the transport direction of the steel material and that descales the steel material using cooling water.

Hot rolling equipment pertaining to a third aspect is the hot rolling equipment pertaining to the first aspect or the second aspect, wherein the hot rolling equipment includes a pre-removal descaling apparatus that is provided between the removal apparatus and a rolling mill located upstream of, and adjacent to, the removal apparatus in the transport direction of the steel material among the plurality of rolling mills in the rough rolling apparatus and that descales the steel material using cooling water.

Hot rolling equipment pertaining to a fourth aspect is the hot rolling equipment pertaining to any one of the first aspect to the third aspect, wherein the removal apparatus is provided between one rolling mill and another rolling mill adjacent to the one rolling mill among the plurality of rolling mills in the rough rolling apparatus.

Hot rolling equipment pertaining to a fifth aspect is the hot rolling equipment pertaining to the fourth aspect, wherein the removal apparatus is provided after the rolling mill located furthest upstream among the plurality of rolling mills in the rough rolling apparatus in the transport direction of the steel material.

Hot rolling equipment pertaining to a sixth aspect is the hot rolling equipment pertaining to any one of the first aspect to the third aspect, wherein the removal apparatus is provided downstream of the rough rolling apparatus and upstream of the finish rolling apparatus in the transport direction of the steel material.

Hot rolling equipment pertaining to a seventh aspect is the hot rolling equipment pertaining to any one of the first aspect to the sixth aspect, wherein the removal apparatus removes the target region from the steel material by scarfing or removes the target region from the steel material by mechanical removal.

Hot rolling equipment pertaining to an eighth aspect is the hot rolling equipment pertaining to any one of the first aspect to the seventh aspect, wherein the heating furnace is provided separately from a production line of a casting machine that casts the steel material.

Hot rolling equipment pertaining to a ninth aspect is the hot rolling equipment pertaining to any one of the first aspect to the seventh aspect, wherein the heating furnace is provided on a production line of a casting machine that casts the steel material.

A hot rolling method pertaining to a tenth aspect is a hot rolling method for hot rolling a steel material containing Cu, the hot rolling method including: a heating process that heats the steel material to a predetermined temperature after casting; a rough rolling process that performs a plurality of rough rolling passes on the steel material that has been heated in the heating process; a finish rolling process that performs finish rolling on the steel material that has been rough rolled in the rough rolling process; and a removal process that removes a target region including cracks caused by a Cu-rich layer that is present at a surface side of the steel material that is being rough rolled or has been rough rolled and in which a concentration of Cu components is higher than a concentration of Cu components in a base material of the steel material, wherein the removal process is performed after a first rough rolling pass among the plurality of rough rolling passes and before the finish rolling process.

A hot rolling method pertaining to an eleventh aspect is the hot rolling method pertaining to the tenth aspect, further comprising a post-removal descaling process that descales the steel material using cooling water after the removal process and before the finish rolling process.

A hot rolling method pertaining to a twelfth aspect is the hot rolling method pertaining to the tenth aspect or the eleventh aspect, further comprising a pre-removal descaling process that descales the steel material using cooling water after a rolling pass that comes immediately before the removal process among the plurality of rough rolling passes and before the removal process.

A hot rolling method pertaining to a thirteenth aspect is the hot rolling method pertaining to any one of the tenth aspect to the twelfth aspect, wherein the removal process is performed with a temperature of the surface of the steel material that is being rough rolled or has been rough rolled being 1000°C or lower.

A hot rolling method pertaining to a fourteenth aspect is the hot rolling method pertaining to any one of the tenth aspect to the thirteenth aspect, wherein, when the removal of the target region is performed by scarfing in the removal process, a transport velocity of the steel material that is being rough rolled or has been rough rolled is 20 m/min or higher.

A hot rolling method pertaining to a fifteenth aspect is the hot rolling method pertaining to any one of the tenth aspect to the fourteenth aspect, wherein the target region is a region of 1 mm or less in a thickness direction from a surface of the steel material that is being rough rolled or has been rough rolled.

Advantageous Effects of Invention

As described above, according to the present disclosure, there are provided hot rolling equipment and a hot rolling method that can inhibit hot-shortness cracks.

BRIEF DESCRIPTION OF DRAWINGS

FIG. 1 is a schematic diagram showing an example of the schematic configuration of hot rolling equipment pertaining to a first embodiment of the disclosure.
FIG. 2 is a schematic diagram showing an example of the thermal history of the hot rolling equipment pertaining to the first embodiment of the disclosure.
FIG. 3 is a cross-sectional diagram showing a steel material that is scarfed by a scarfing apparatus pertaining to the first embodiment of the disclosure.
FIG. 4 is a schematic diagram showing an example of the schematic configuration of the scarfing apparatus pertaining to the first embodiment of the disclosure.
FIG. 5 is a schematic diagram showing an example of the schematic configuration of a target region pertaining to the first embodiment of the disclosure.

FIG. 6 is a flowchart showing an example of a hot rolling process pertaining to the first embodiment of the disclosure.

FIG. 7 is a schematic diagram showing an example of the schematic configuration of a hot rolling apparatus and a scarfing apparatus pertaining to a first example modification.

FIG. 8 is a schematic diagram showing an example of the schematic configuration of a hot rolling apparatus and a scarfing apparatus pertaining to a second example modification.

FIG. 9 is a schematic diagram showing an example of the schematic configuration of a hot rolling apparatus and a scarfing apparatus pertaining to the second example modification.

FIG. 10 is a schematic diagram showing an example of the schematic configuration of a hot rolling apparatus and a scarfing apparatus pertaining to a third example modification.

FIG. 11 is a schematic diagram showing an example of the schematic configuration of a hot rolling apparatus and a scarfing apparatus pertaining to a fourth example modification.

FIG. 12 is a schematic diagram showing an example of the schematic configuration of hot rolling equipment pertaining to a second embodiment of the disclosure.

FIG. 13 is a schematic diagram showing an example of the schematic configuration of a cutting apparatus pertaining to the second embodiment of the disclosure.

FIG. 14 is a schematic diagram showing an example of the schematic configuration of hot rolling equipment pertaining to a third embodiment of the disclosure.

FIG. 15 is a schematic diagram showing an example of the thermal history of the hot rolling equipment pertaining to the third embodiment of the disclosure.

FIG. 16 is a graph showing, in regard to steel sheets pertaining to an Example and a Comparative Example, the relationship between the concentration of Cu in the steel sheets and the depth of surface cracks in the steel sheets.

DETAILED DESCRIPTION

Preferred embodiments of the disclosure will be described in detail below with reference to the attached drawings. It will be noted that redundant description will be omitted by assigning identical reference signs to constituent elements having substantially identical functional configurations in the specification and the drawings. Furthermore, unless otherwise specified, each constituent element is not limited to one and may be plural.

<First Embodiment>

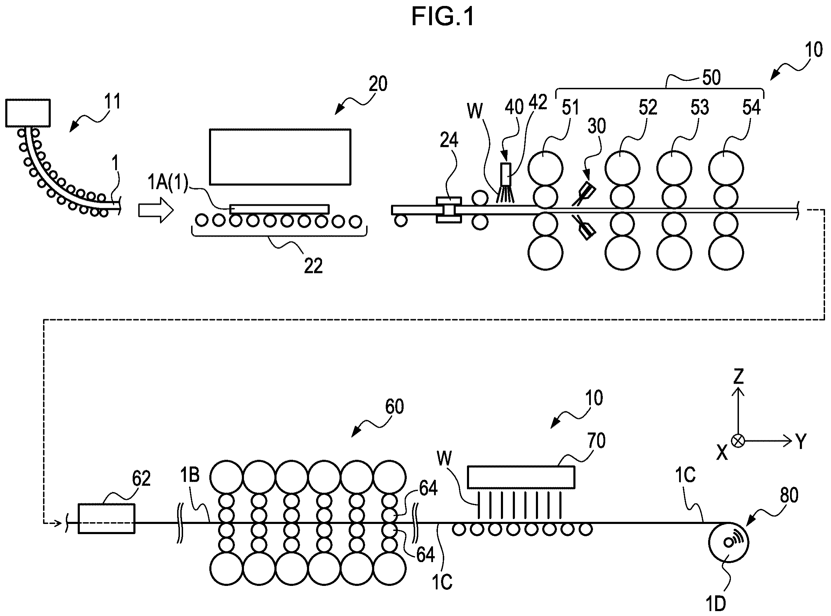

First, the schematic configuration of hot rolling equipment 10 pertaining to a first embodiment of the disclosure will be described with reference to FIG. 1. FIG. 1 is a diagram showing the schematic configuration of the hot rolling equipment 10.

As shown in FIG. 1 as an example, the hot rolling equipment 10 is equipment for hot rolling a steel material 1. The hot rolling equipment 10 is, as an example, provided separately from a production line of a continuous casting machine 11 that continuously casts the steel material 1. The hot rolling equipment 10 includes a heating furnace 20, a scarfing apparatus 30, a descaling apparatus 40, a rough rolling apparatus 50, and a finish rolling apparatus 60. It will be noted that the steel material 1 is not limited to being continuously cast and may also be individually cast.

The heating furnace 20 heats to a predetermined temperature the steel material 1 (e.g., a slab 1A), which is obtained by cutting to a predetermined length the steel material 1 discharged from the continuous casting machine 11. The "predetermined temperature" here is, for example, 1100 °C or higher. The slab 1A is heated by the heating furnace 20 while being transported by transport rolls 22. It will be noted that although the slab 1A is mentioned as an example of the steel material 1 here, it is merely an example, and the steel material 1 may also be a billet.

The steel material 1 is a steel material containing Cu and is, for example, a steel material containing Cu at 0.15 wt% (mass%) or more and particularly containing Cu at 0.25 wt% or more. It will be noted that the content of Cu here means the average content of Cu in the base material of the steel material 1 described later or the average content of Cu in the molten steel that becomes the steel material 1. Furthermore, the content of Cu in the steel material 1 is, for example, 5.6 wt% or less.

The descaling apparatus 40 removes scale (i.e., an oxide film) formed on the surfaces of the slab 1A on both sides in the thickness direction and the surfaces (side end faces) of the slab 1A on both sides in the width direction before rough rolling by the rough rolling apparatus 50. The descaling apparatus 40 removes scale by spraying a fluid (e.g., cooling water) from a nozzle 42 onto the slab 1A. That is, the descaling apparatus 40 sprays cooling water W, which is for example supplied from a cooling water tank (not shown in the drawings) and pressurized to a predetermined hydraulic pressure using a pump (not shown in the drawings), from the nozzle 42 onto the surfaces of the slab 1A. Scale on the surfaces of the slab 1A is removed by the descaling apparatus 40, and the temperature of the surfaces of the slab 1A is cooled to less than 1100 °C by heat removal by the cooling water W. Here, the temperature of the surfaces of the slab 1A (e.g., the width direction surfaces of the slab 1A) after scale has been removed by the descaling apparatus 40 is measured by an infrared thermometer.

The rough rolling apparatus 50 rough rolls (hot rough rolls) the slab 1A to thin the slab 1A to a predetermined thickness. Specifically, the rough rolling apparatus 50 reduces the slab 1A, which has been reduced in the width direction by vertical rolls 24, from upper and lower directions to form a rough bar 1B. In the example shown in FIG. 1, the rough rolling apparatus 50 includes four rolling mills 51, 52, 53, 54. Each of the rolling mills 51 to 54 has a plurality of rolls that sandwich the slab 1A from both sides in the thickness direction. The rough rolling apparatus 50 uses the rolling mills 51 to 54 to continuously roll the slab 1A. In the rough rolling apparatus 50, the slab 1A is thinned to a thickness of about 25 to 50 mm for example and formed into the rough bar 1B.

The scarfing apparatus 30 removes the surface part (surface layer) of the steel material 1 by scarfing the steel material 1 from the rough rolling process on (i.e., during roughing or after roughing). Details about the scarfing apparatus 30 will be described further below. In the example shown in FIG. 1, the scarfing apparatus 30 is provided downstream of the rolling mill 51 located most upstream in the transport direction of the steel material 1 among the plurality of rolling mills 51 to 54 with which the rough rolling apparatus 50 is equipped. Moreover, the scarfing apparatus 30 is provided upstream of the finish rolling apparatus 60 in the transport direction of the steel material 1. The temperature of the surface of the steel material 1 is 1000 °C or lower at the stage when the steel material 1 is scarfed by the scarfing apparatus 30. It will be noted that in this specification, "removal" is a concept that is not limited to complete removal and also includes cases where there is insufficient removal within a generally acceptable range in the technical field to which the disclosure belongs and to an extent that does not go against the spirit of the disclosure. It will be noted that the scarfing apparatus 30 is an example of a removal apparatus.

The scarfing apparatus 30 is provided between the rolling mill 51 provided most upstream and the rolling mill 52 provided in the second stage in the rough rolling apparatus 50 in the transport direction of the steel material 1 (i.e., after the rolling mill 51 provided most upstream). In other words, the scarfing apparatus 30 is provided between the rolling mill 51 and the rolling mill 52 adjacent to the rolling mill 51.

The finish rolling apparatus 60 further hot finish rolls the rough bar 1B to a predetermined thickness. Specifically, the finish rolling apparatus 60 finish rolls the rough bar 1B, which has been reheated by a rough bar heating apparatus 62, to a thickness of about a few mm (e.g., 1 to 2 mm). The finish rolling apparatus 60 has a plurality of finish rolling roll 64 groups across 6 to 7 stands. Each finish rolling roll 64 group has a plurality of rolling rolls arranged in a vertically straight line. The finish rolling apparatus 60 gradually reduces the rough bar 1B by passing the rough bar 1B through gaps in the plural finish rolling roll 64 groups. A steel strip 1C, obtained as a result of the rough bar 1B being finish rolled to a predetermined thickness by the finish rolling apparatus 60, is fed to a cooling apparatus 70. It will be noted that although an example where the finish rolling apparatus 60 has 6 to 7 stands is described here, this is merely an example, and the finish rolling apparatus 60 may, for example, have five stands of finishing roll 64 groups.

The cooling apparatus 70 cools the finished steel strip 1C with cooling water W. The cooling apparatus 70 is, for example, a pipe laminar nozzle type cooling apparatus. 1C cooled by the cooling apparatus 70 is coiled into a coil by a coiling apparatus 80 and transported as a hot-rolled coil 1D from the hot rolling equipment 10 to the next process.

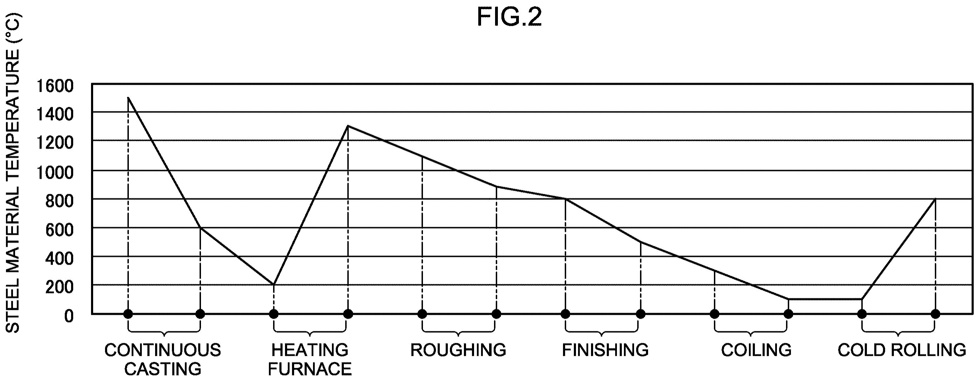

FIG. 2 shows an example of the thermal history of the steel material 1 in a series of processes of continuous casting, hot rolling, and cold rolling. As shown in FIG. 2, at the start of continuous casting, the temperature of the steel material 1 is about 1500 °C, so scale forms on the surface of the steel material 1. This is because when the steel material 1 reaches 1100 °C or higher, a reaction of $2Fe+O_2 = 2FeO$ mainly proceeds on the surface of the steel material 1 such that iron oxide (i.e., FeO) is formed on the surface of the steel material 1 and becomes scale. At this time, Cu remains in the steel material 1 without oxidizing, but in this temperature range, if the base material of the steel material 1 includes a relatively large amount of Cu (e.g., if the average concentration of Cu components in the base material is 0.15 wt % (mass%) or more), the Cu is locally removed from the iron oxide and infiltrates into the boundary between the iron oxide and the base metal part of the steel material 1. The Cu removed from the iron oxide mainly infiltrates into and concentrates at grain boundaries in the surface layer of the base metal part of the steel material 1. In this way, a region (hereinafter called a "Cu-rich layer") in which the concentration of Cu components is higher than the average concentration of Cu components in the base material of the steel material 1 is formed in the surface layer (surface side) of the base metal part of the steel material 1 (i.e., a Cu concentration phenomenon occurs).

It will be noted that "Cu-rich layer" means a region where the concentration of Cu components is higher than the average concentration of Cu components in the base material of the steel material in the base metal part of the steel material that is unoxidized when scale associated with oxidation is formed on the surface of the steel material. In other words, "Cu-rich layer" means a region from the boundary between scale formed on the surface of the steel material and the base metal part of the steel material, i.e., from the surface of the base metal of the steel material that is not oxidized, toward the thickness direction center of the steel material until Cu components concentrated at the grain boundaries are no longer observed. The "region where Cu components concentrated at the grain boundaries are not observed" here means a region where the concentration of the Cu components present at the grain boundaries is equal to or less than the steel material average concentration + 1%. Furthermore, "base material of the steel material" means the part of the steel material excluding the Cu-rich layer.

When Cu is present in a liquid-phase state (e.g., at 1100 °C or higher) at the grain boundaries, the ductility of the grain boundaries decreases. For this reason, when a Cu-rich layer is formed in the steel material 1, the steel material 1 exhibits hot-shortness, and hot-shortness cracks caused by the Cu-rich layer occur in the surface of the steel material 1. Hot-shortness cracks occurring in the surface of the steel material 1 need to be removed because they become a quality defect. Particularly in high-grade steel materials and auto and motive steel sheets where importance is attached to surface quality, surface cracks in the steel material 1 need to be removed.

In conventionally known surface trimming methods, surface layer defects such as iron oxide that has formed on the surface of the slab 1A, inclusions and casting powder that have become embedded in the surface layer of the slab 1A during casting, or air bubble marks in the surface layer of the slab 1A are removed by a machine scarfer or the like. This removal of surface layer defects is performed before the heating process (i.e., heating by the heating furnace 20) in the hot rolling process. That is, surface layer defects are removed from the slab 1A before the hot rolling process. However, in the heating process in the hot rolling process, the slab 1A is reheated to 1100 °C or higher (e.g., about 1300 °C), so scale reforms on the surface of the slab 1A. As a result, the Cu concentration phenomenon reoccurs in the slab 1A, and hot-shortness cracks also reoccur.

Thus, as a result of extensive research, the present inventors arrived at the idea of removing, in the rough rolling process in the hot rolling process, hot-shortness cracks caused by the Cu-rich layer in the surface of the slab 1A. That is, in the thermal history of the steel material 1 shown in FIG. 2, the steel material 1 cools to 1000 °C or lower during the rough rolling process after leaving the heating furnace 20, and from then on its temperature does not rise to 1100 °C or higher. For that reason, in processes from the rough rolling process on, both the Cu concentration phenomenon is inhibited and hot-shortness cracks are inhibited. Consequently, when hot-shortness cracks are removed from the steel material 1 during the rough rolling process or after the rough rolling process, it becomes unnecessary to again remove hot-shortness cracks from the steel material 1 in processes from then on.

It will be noted that even if the steel material 1 is heated to 1100 °C or higher in the rough rolling process or the finish rolling process, scale causing a Cu-rich layer would not form on the surface of the steel material 1 because the heating of the steel material 1 associated with rolling is of a short duration of time.

Furthermore, hot-shortness caused by the Cu concentration phenomenon mainly occurs at 1100 °C to 1250 °C. Furthermore, the upper limit value of the temperature at which hot-shortness occurs becomes higher the higher the Cu concentration in the steel material 1 is. Furthermore, in terms of the relationship between the heating temperature of the steel material 1 and the depth of hot-shortness cracks in the steel material 1, the higher the heating temperature of steel material 1 is, the coarser the y (austenite) grain boundaries become, so the depth of the hot-shortness cracks caused by Cu concentrating at the grain boundaries also increases. On the other hand, in terms of the relationship between the heating temperature of the steel material 1 and the number of hot-shortness cracks in the steel material 1, the higher the heating temperature of the steel material 1 is, the fewer the number of grain boundaries there are, so the fewer the number of hot-shortness cracks in the steel material 1 there are.

Here, the depth to which Cu infiltrates into the base metal part of the steel material 1 from the iron oxide is relatively shallow and is at most about 50 $\mu$m. The reason for this is thought to be as follows. That is, when cracks occurring in the surface of the steel material 1 progress, in the early stage of the progression of the cracks, Cu in a liquid-phase state infiltrates into the leading ends of the cracks. For that reason, the ductility of the grain boundaries decreases, making it easier for the cracks to progress. On the other hand, as the progression of the cracks proceeds, the residual amount of Cu remaining at the grain boundaries increases. As a result, the amount of Cu present in the leading ends of the cracks gradually decreases, and eventually the progression of the cracks stops. At this time, the depth of the surface cracks is about the size of one austenite grain.

Furthermore, when the amount of displacement caused by tensile stress increases near the surface of the steel material 1, the depth of the surface cracks increases at the initial stage of the displacement, but as the displacement progresses, the depth of the surface cracks does not increase but the width of the surface cracks increases. Consequently, in hot-shortness cracks caused by the Cu concentration phenomenon, the depth to which the surface cracks progress is at most a few mm (e.g., 1 mm). For that reason, if a few mm (e.g., 1 mm) of the surface layer of the steel material 1 are removed in the steel material 1 after it is rolled, quality defects in the surface of the steel material 1 can be inhibited.

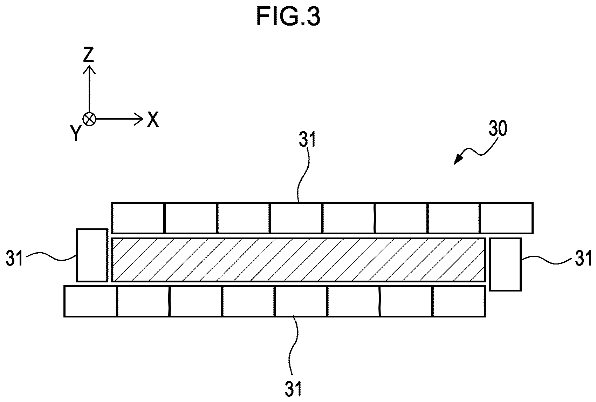

Thus, in the hot rolling equipment 10 pertaining to the present embodiment, the surface layer of the slab 1A is removed by the scarfing apparatus 30. As shown in FIG. 3 as an example, the scarfing apparatus 30 has two scarfer units 31 that oppose the surfaces of the steel material 1 on both sides (top and bottom sides) in the thickness direction and two scarfer units 31 that oppose the surfaces (side end faces) of the steel material 1 on both sides (left and right sides) in the width direction. It will be noted that the four scarfer units 31 have the same configuration. For that reason, the scarfer unit 31 that opposes the surface of the steel material 1 on one side (the upper side) in the thickness direction will be described below.

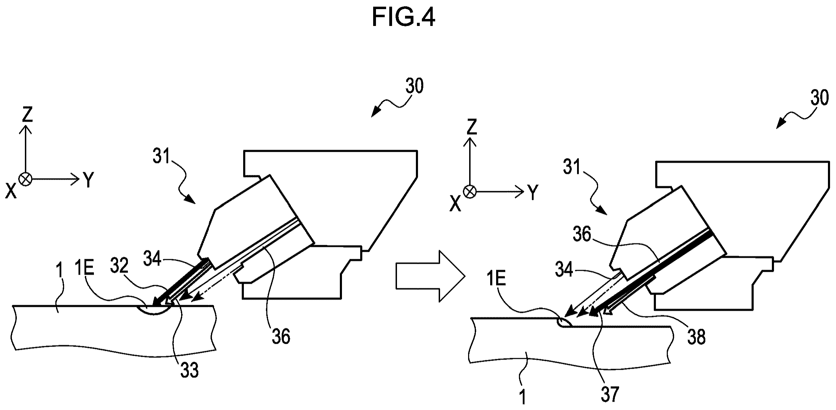

As shown in FIG. 4, the scarfer unit 31 includes a preheating gas jetting unit 34 and a scarfing oxygen jetting unit 36. The preheating gas jetting unit 34 jets preheating oxygen 32 and a combustible gas 33. The scarfing oxygen jetting unit 36 jets scarfing oxygen 37. It will be noted that a shielding gas 38 comprising a combustible gas is jetted together with the scarfing oxygen 37 from the lower portion of the scarfing oxygen jetting unit 36. The steel material 1 is configured to be transported in the direction of arrow Y in FIG. 4.

It will be noted that as shown in FIG. 4, the jet flow of the scarfing oxygen 37 jetted from the scarfing oxygen jetting unit 36 is jetted more forwardly in the transport direction Y of the steel material 1 than the jet flows of the preheating oxygen 32 and the combustible gas 33 jetted from the preheating gas jetting unit 34.

In the scarfing apparatus 30, first, as shown on the left side of FIG. 4, a preheating process is performed. In the preheating process, the preheating oxygen 32 and the combustible gas 33 are jetted from the preheating gas jetting unit 34 of the scarfer unit 31 toward the surface of the steel material 1, causing the combustible gas 33 to burn. Then, a part of the surface of the steel material 1 is melted by the heat of the burning combustible gas 33, forming a reservoir 1E.

It will be noted that the length, along the transport direction Y, of the reservoir 1E formed in the surface of the steel material 1 is in the range of about 20 mm to 30 mm for example.

Next, as shown on the right side of FIG. 4, a scarfing process is performed. In the scarfing process, the scarfing oxygen 37 is jetted from the scarfing oxygen jetting unit 36 of the scarfer unit 31 toward the surface of the steel material 1, and the steel material 1 in which the reservoir 1E has been formed is transported in the transport direction Y. At this time, the shielding gas 38 is jetted together with the scarfing oxygen 37 from the scarfing oxygen jetting unit 36, and the scarfing oxygen 37 is protected by the shielding gas 38. It will be noted that the scarfing process is an example of a removal process.

Then, the jet flow of the scarfing oxygen 37 jetted from the scarfing oxygen jetting unit 36 hits the molten iron in the reservoir 1E in the transported steel material 1, and an oxidation reaction between the molten iron and the scarfing oxygen 37 occurs. Heat from the oxidation reaction successively melts the surface of the steel material 1 and scarfs the surface of the steel material 1. That is, the surface of the steel material 1 becomes scarfed by the heat from the oxidation reaction on the rear side of the reservoir 1E in the transport direction Y. In this way, the surface of the slab 1A after it has been heated in the heating furnace 20 is scarfed by the scarfing apparatus 30.

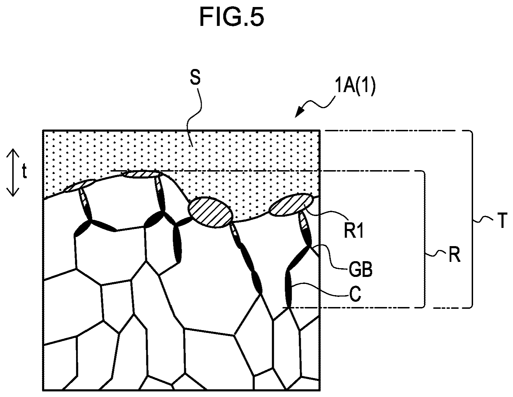

As shown in FIG. 5 as an example, the scarfing apparatus 30 removes a target region T, which is a region including cracks C caused by a Cu-rich layer R. Here, "target region T" means a predetermined thickness region set from the surface of the steel material 1 toward the thickness direction center of the steel material 1 so as to include all of the Cu-rich layer R, the cracks C caused by the Cu-rich layer R, and scale S. The target region T is a range extending a predetermined distance from the surface of the steel material 1 (i.e., the surface of the scale S) in a thickness direction t of the steel material 1. The predetermined distance is, for example, greater than 0 mm and equal to or less than 3 mm ($0 < \text{distance} \leq 3$ mm), preferably greater than 0 mm and equal to or less than 2 mm ($0 < \text{distance} \leq 2$ mm), and more preferably greater than 0 mm and equal to or less than 1 mm ($0 < \text{distance} \leq 1$ mm).

When the steel material 1 is the rough bar 1B, the thickness of the steel material 1 is about 25 to 50 mm for example. Thus, by removing a region of 1 mm or less from the surface of the steel material 1 as the target region T in the thickness direction t of the slab 1A, the reduction in the thickness of the steel material 1 is mitigated, so the yield of the slab 1A can be improved.

Here, the relationship between the maximum transport velocity of the slab 1A at which the surface of the slab 1A can be continuously scarfed without interruption and the scarfing depth of the slab 1A at that time is given by the following equation (1).

$$ h = 6 \times Vs^{-0.6} \qquad \text{... (1)} $$

h (mm): scarfing depth of slab 1A, Vs (m/min): maximum transport velocity of slab 1A at which it can be continuously scarfed without interruption

As shown in the above equation (1), the faster the transport velocity of the slab 1A during scarfing is, the thinner the scarfing depth of the slab 1A becomes. That is, the faster the transport velocity of the slab 1A is, the thinner the scarfing depth of the slab 1A becomes. As described above, the depth of the surface cracks in the steel material 1 is considered to be about a few mm (e.g., 1 mm). For that reason, in order to keep the scarfing depth of the slab 1A at about 1 mm to 2 mm, the transport velocity of the slab 1A is preferably set to 20 m/min or higher. Furthermore, by setting the transport velocity of the slab 1A to 20 m/min or higher, scarfing is inhibited from being partially interrupted even during thin scarfing where the scarfing depth of the slab 1A is 1 mm. It will be noted that the upper limit of the transport velocity of the slab 1A during scarfing is appropriately set based on the operating conditions of the scarfing apparatus 30 and the thickness of the steel material 1 to be scarfed and is, for example, set to 80 m/min or lower.

It will be noted that although FIG. 5 shows an example where one surface of the steel material 1 in the thickness direction is scarfed, the scarfing apparatus 30 pertaining to the present embodiment also scarfs the other surface of the steel material 1 in the thickness direction and the surfaces (side end faces) of the steel material 1 on both sides in the width direction.

Due to the target region T including the Cu-rich layer R being scarfed (removed) from the steel material 1, the cracks C present at grain boundaries GB are removed. As a result, hot-shortness cracks in the surface of the steel material 1 are inhibited.

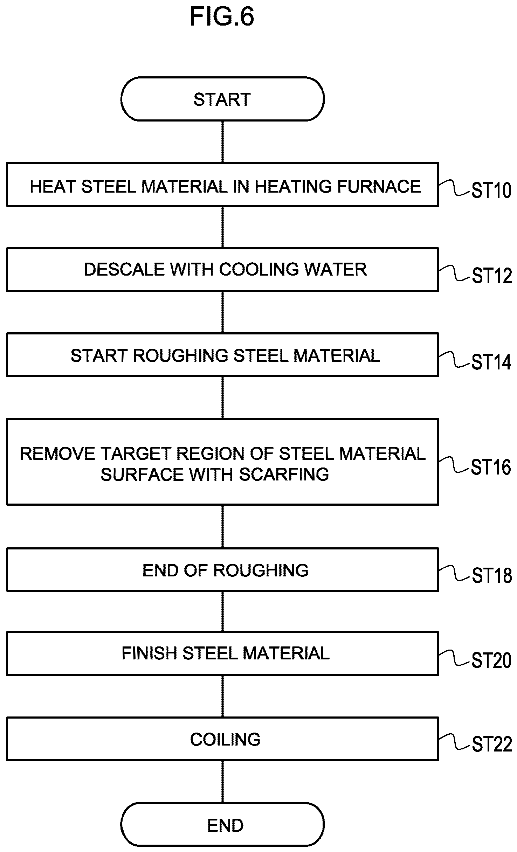

Next, a hot rolling method pertaining to the present embodiment will be described with reference to FIG. 6. FIG. 6 is a flowchart for describing a part of a process for manufacturing a hot-rolled steel sheet pertaining to the present embodiment. As shown in FIG. 6, first, in the heating process of step ST10, the slab 1A after it is continuously cast is heated to a predetermined temperature (e.g., about 1300 °C) by the heating furnace 20. After the heating process of step ST10 is executed, the manufacturing process moves to step ST12.

In the descaling process of step ST12, descaling using the cooling water W is performed by the descaling apparatus 40 on the slab 1A that was heated in step ST10. Due to the descaling being performed, the surface temperature of the slab 1A drops to less than 1100 °C for example. After the descaling process of step ST12 is executed, the manufacturing process moves to step ST14.

In the rough rolling process of step ST14, the slab 1A that was descaled in step ST12 is rough rolled by the rough rolling apparatus 50. Because of this, the slab 1A is formed into the rough bar 1B having a predetermined thickness. After the rough rolling process of step ST14 is executed, the manufacturing process moves to step ST16.

In the scarfing process (removal process) of step ST16, the slab 1A that was rough rolled in step ST14 is scarfed by the scarfing apparatus 30, whereby the target region T including the Cu-rich layer is removed from the slab 1A. The scarfing of the slab 1A by the scarfing apparatus 30 is performed after the first rough rolling pass of the slab 1A among the rough rolling passes of the slab 1A performed multiple times (e.g., four times) by the rough rolling apparatus 50. At the stage when the slab 1A is scarfed by the scarfing apparatus 30, the temperature of the surface of the slab 1A drops to 1000 °C or lower. After the scarfing process of step ST16 is executed, the manufacturing process moves to step ST18.

In the rough rolling process of step ST18, the remaining rough rolling is performed by the rough rolling apparatus 50 on the slab 1A that was scarfed in step ST16. Because of this, the slab 1A is formed into the rough bar 1B, and the rough rolling process ends. After the rough rolling process of step ST18 is executed, the manufacturing process moves to step ST20.

In the finish rolling process of step ST20, the rough bar 1B that was obtained in step ST18 is finished by the finish rolling apparatus 60. Because of this, the rough bar 1B is formed into the steel strip 1C having a predetermined thickness. After the finish rolling process of step ST20 is executed, the manufacturing process moves to step ST22.

In the coiling process of step ST22, the steel strip 1C that was obtained in step ST20 is coiled by the coiling apparatus 80 and thereby formed into the hot-rolled coil 1D. After the coiling process of step ST22 is executed, a part of the process for manufacturing the hot-rolled steel sheet pertaining to the present embodiment ends.

As described above, in the hot rolling equipment 10 pertaining to the first embodiment, the scarfing apparatus 30 is provided downstream of the rolling mill 51 located most upstream in the transport direction of the steel material 1 among the plurality of rolling mills 51 to 54 in the rough rolling apparatus 50 and upstream of the finish rolling apparatus 60. When the steel material 1 is heated to the predetermined temperature (e.g., 1300 °C) in the heating furnace 20, Cu in a liquid-phase state concentrates at the grain boundaries GB near the surface of the steel material 1. The areas of the steel material 1 where Cu has concentrated have poor ductility compared with the base metal part of the steel material 1. For this reason, the occurrence of a Cu-rich layer becomes one of the causes of hot-shortness cracks. In the present embodiment, there is provided the scarfing apparatus 30 that removes surface cracks caused by the Cu-rich layer from the steel material 1 that is rough rolled after being heated by the heating furnace 20. Because of this, cracks occurring in the surface of the steel material 1 are removed during rough rolling or after rough rolling. Consequently, according to the present embodiment, the occurrence of hot-shortness cracks in the steel material 1 is inhibited.

Let us consider a case where, for example, the scarfing apparatus 30 is provided upstream of the rough rolling apparatus 50 (e.g., upstream of the heating furnace 20) in the transport direction of the steel material 1. In this case, if the temperature of the steel material 1 remains high (e.g., 1100 °C or higher), a Cu-rich layer will reform in the steel material 1 and hot-shortness cracks will occur. For this reason, it is difficult to inhibit hot-shortness cracks in the steel material 1. In the present embodiment, cracks occurring in the surface of the steel material 1 are removed during rough rolling or after rough rolling, so the occurrence of hot-shortness cracks in the steel material 1 is inhibited.

On the other hand, let us consider a case where the scarfing apparatus 30 is provided downstream of the finish rolling apparatus 60 in the transport direction of the steel material 1. In this case, the temperature of the steel material 1 sufficiently drops, so the Cu concentration phenomenon is less likely to occur. However, the thickness of the steel material 1 (the steel strip 1C) in the finish rolling stage is decreased compared with the thickness of the steel material 1 (the slab 1A) until the rough rolling stage. For that reason, when surface cracks in the steel material 1 are removed in the finish rolling stage, the thickness of the steel material 1 decreases even more, leading to a reduction in the yield of the steel material 1. In the present embodiment, cracks occurring in the surface of the steel material 1 are removed during rough rolling or after rough rolling, so a reduction in the yield of the steel material 1 in the hot rolling process is inhibited.

Furthermore, in the hot rolling equipment 10 pertaining to the first embodiment, the scarfing apparatus 30 is provided between the rolling mill 51 and the rolling mill 52 adjacent to the rolling mill 51 among the plurality of rolling mills 51 to 54 in the rough rolling apparatus 50. In other words, the scarfing apparatus 30 is provided between the rolling mill 51 and the rolling mill 52 that are adjacent to each other among the plurality of rolling mills 51 to 54. Because of this, cracks occurring in the surface of the steel material 1 are removed during the rough rolling process. Consequently, according to the present embodiment, the occurrence of hot-shortness cracks in the steel material 1 is inhibited.

Furthermore, in the hot rolling equipment 10 pertaining to the first embodiment, the scarfing apparatus 30 is provided after the rolling mill 51 located most upstream in the transport direction of the steel material 1 among the plurality of rolling mills 51 to 54. In other words, the scarfing apparatus 30 is provided on the roll exit side of the rolling mill 51 located most upstream in the transport direction of the steel material 1. Because of this, cracks occurring in the surface of the steel material 1 are removed during rough rolling. Furthermore, surface cracks in the steel material 1 are removed in a state in which the thickness of the steel material 1 is thickest in the rough rolling stage. Consequently, according to the present embodiment, the occurrence of hot-shortness cracks in the steel material 1 is inhibited, and a reduction in the yield of the steel material 1 in the hot rolling process is inhibited.

Furthermore, in the hot rolling equipment 10 pertaining to the first embodiment, the steel material 1 is scarfed by the scarfing apparatus 30, whereby the target region T including the Cu-rich layer is removed from the steel material 1. Scarfing results in high productivity compared with removal by cutting. Consequently, according to the present embodiment, a reduction in productivity in the hot rolling equipment 10 can be inhibited.

Furthermore, in the hot rolling equipment 10 pertaining to the first embodiment, the transport velocity of the steel material 1 is set to 20 m/min or higher when the steel material 1 is scarfed by the scarfing apparatus 30. Because the transport velocity of the steel material 1 is set to 20 m/min or higher in this way, the scarfing depth of the steel material 1 becomes about 1 mm. Because of this, surface cracks in the steel material 1 are removed. Consequently, according to the present embodiment, the occurrence of hot-shortness cracks in the steel material 1 is inhibited.

Furthermore, in the hot rolling equipment 10 pertaining to the first embodiment, a region of 1 mm or less from the surface of the steel material 1 in the thickness direction t of the steel material 1 is removed. Cracks caused by the Cu-rich layer mainly occur in a region of 1 mm or less from the surface of the steel material 1 in the thickness direction t of the steel material 1. This is because, as described above, in hot-shortness caused by Cu, the depth to which surface cracks in the steel material 1 progress is at most a few mm (e.g., 1 mm). For that reason, removing a region up to 1 mm from the surface of the steel material 1 in the thickness direction t of the steel material 1 contributes to removal of the cracks. Consequently, according to the present embodiment, the occurrence of hot-shortness cracks in the steel material 1 is inhibited.

(First Example Modification)

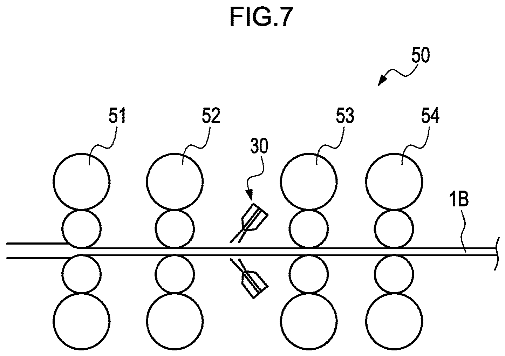

In the first embodiment, an example was described where the scarfing apparatus 30 is provided between the rolling mill 51 provided most upstream and the rolling mill 52 provided in the second stage in the rough rolling apparatus 50 in the transport direction of the steel material 1, but the disclosure is not limited to this example. As shown in FIG. 7 as an example, in a first example modification, the scarfing apparatus 30 is provided between the rolling mill 52 provided in the second stage (hereinafter also called "the second rolling mill 52") and the rolling mill 53 provided in the third stage (hereinafter also called "the third rolling mill 53") in the rough rolling apparatus 50 in the transport direction of the steel material 1. In other words, the scarfing apparatus 30 is provided between the second rolling mill 52 and the third rolling mill 53 that are adjacent to each other. In this way, in the first example modification, the scarfing apparatus 30 is provided between the second rolling mill 52 and the third rolling mill 53 in the rough rolling apparatus 50. Because of this, cracks occurring in the surface of the steel material 1 are removed during rough rolling. Consequently, according to the present example modification, the occurrence of hot-shortness cracks in the steel material 1 is inhibited.

It will be noted that although an example where the scarfing apparatus 30 is provided between the second rolling mill 52 and the third rolling mill 53 is given here, the disclosure is not limited to this example. The scarfing apparatus 30 may also be provided between the third rolling mill 53 and the final-stage rolling mill 54. Furthermore, although an example where the rough rolling apparatus 50 includes four rolling mills is given here, the disclosure is not limited to this example. The rough rolling apparatus 50 may include five or more rolling mills or three or fewer rolling mills.

(Second Example Modification)

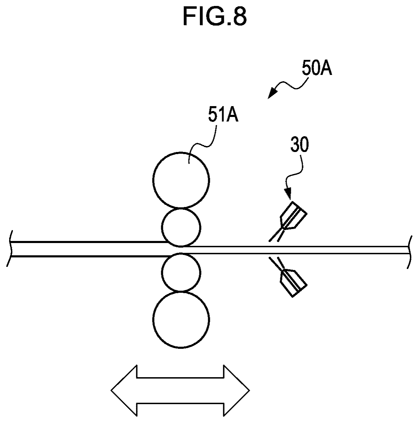

In the first embodiment, an example was described where the rough rolling apparatus 50 includes the non-reversing rolling mills 51 to 54, but the disclosure is not limited to this example. As shown in FIG. 8 as an example, in a second example modification, a rough rolling apparatus 50A includes a reversing rolling mill 51A. Furthermore, the scarfing apparatus 30 is provided downstream of the reversing rolling mill 51A in the transport direction of the steel material 1. In this case, after a first rolling pass of the steel material 1 is performed in the reversing rolling mill 51A, the steel material 1 is scarfed by the scarfing apparatus 30. Thereafter, the steel material 1 is moved in the opposite direction of the transport direction, and the steel material 1 is rolled multiple times in the reversing rolling mill 51A.

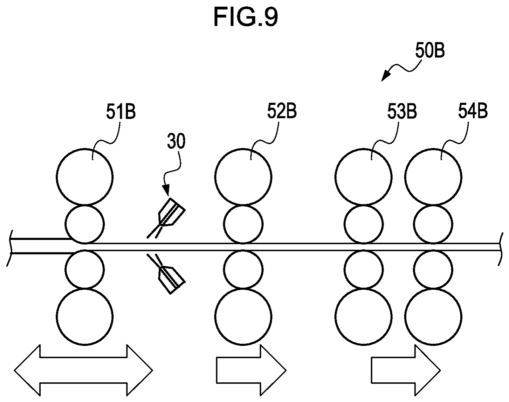

Furthermore, as shown in FIG. 9 as an example, a rough rolling apparatus 50B includes a reversing rolling mill 51B, a non-reversing rolling mill 52B, and a tandem rolling mill 53B. In the example shown in FIG. 9, the scarfing apparatus 30 is provided downstream of the reversing rolling mill 51B in the transport direction of the steel material 1. That is, the scarfing apparatus 30 is provided between the reversing rolling mill 51B and the non-reversing rolling mill 52B. After a first rolling pass of the steel material 1 is performed in the reversing rolling mill 51B, the steel material 1 is scarfed by the scarfing apparatus 30. Then, after the steel material 1 is rolled multiple times in the reversing rolling mill 51B, the steel material 1 is rolled in the non-reversing rolling mill 52B and the tandem rolling mill 53B. It will be noted that although an example where the scarfing apparatus 30 is provided downstream of the reversing rolling mill 51B in the transport direction of the steel material 1 is described here, the disclosure is not limited to this example. The scarfing apparatus 30 may also be provided between the non-reversing rolling mill 52B and the tandem rolling mill 53B.

In the second example modification, the scarfing apparatus 30 is provided after the rolling mill (the reversing rolling mill 51B) located most upstream in the rough rolling apparatus 50 in the transport direction of the steel material 1. Because of this, cracks occurring in the surface of the steel material 1 are removed during rough rolling. Furthermore, in the rough rolling process, surface cracks in the steel material 1 are removed in a state in which the thickness of the steel material 1 is thickest. Consequently, according to the present example modification, the occurrence of hot-shortness cracks in the steel material 1 is inhibited, and a reduction in the yield of the steel material 1 in the hot rolling process is inhibited.

(Third Example Modification)

In the first embodiment, an example was described where the scarfing of the steel material 1 by the scarfing apparatus 30 is performed during rough rolling, but the disclosure is not limited to this example. In a third example modification, the scarfing of the steel material 1 by the scarfing apparatus 30 is performed after rough rolling and before finish rolling.

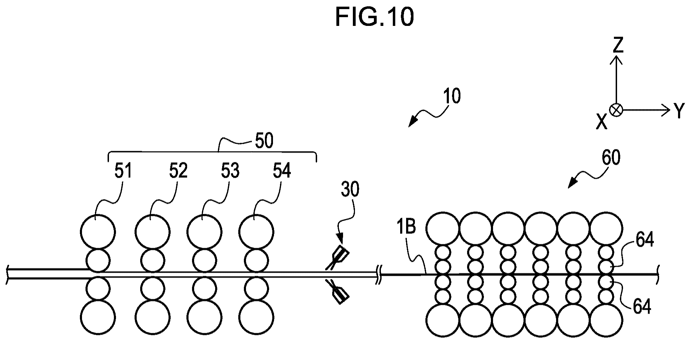

As shown in FIG. 10 as an example, the scarfing apparatus 30 is provided downstream of the rough rolling apparatus 50 in the transport direction of the steel material 1. Moreover, the scarfing apparatus 30 is provided upstream of the finish rolling apparatus 60 in the transport direction of the steel material 1. Specifically, the scarfing apparatus 30 is provided between the exit side of the rough rolling apparatus 50 and the entry side of the finish rolling apparatus 60. In this way, in the third example modification, the scarfing apparatus 30 is provided after the rough rolling apparatus 50 and before the finish rolling apparatus 60 in the transport direction of the steel material 1. Because of this, cracks occurring in the surface of the steel material 1 are removed after the rough rolling process. Since the temperature of the steel material 1 after the rough rolling process sufficiently drops (e.g., 1000 °C or lower), a Cu-rich layer is unlikely to form, and surface cracks in the steel material 1 are inhibited from reoccurring. Consequently, according to the present example modification, the occurrence of hot-shortness cracks in the steel material 1 is inhibited.

Furthermore, in the third example modification, since the steel material 1 is scarfed before finish rolling, the yield in the hot rolling process improves compared with a case where the steel material 1 whose thickness has been reduced by finish rolling is scarfed.

(Fourth Example Modification)

In the first embodiment, an example was described where a descaling process is not performed before and after the scarfing process (removal process), but the disclosure is not limited to this example. In a fourth example modification, a pre-removal descaling process is performed before the scarfing process (removal process), and a post-removal descaling process is performed after the scarfing process (removal process).

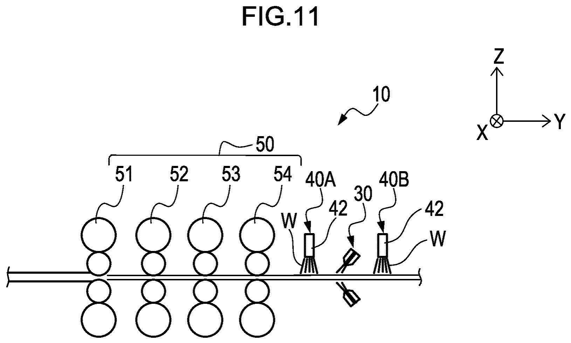

As shown in FIG. 11 as an example, the scarfing apparatus 30 is provided downstream of the rough rolling apparatus 50 and upstream of the finish rolling apparatus 60 in the transport direction of the steel material 1. Furthermore, a pre-removal descaling apparatus 40A is provided downstream of the rough rolling apparatus 50 and upstream of the scarfing apparatus 30 in the transport direction of the steel material 1. Namely, the pre-removal descaling apparatus 40A is provided between the rolling mill 54 located most downstream in the transport direction of the steel material 1 among the plurality of rolling mills 51 to 54 in the rough rolling apparatus 50 and the scarfing apparatus 30. The basic configuration of the pre-removal descaling apparatus 40A is the same as that of the descaling apparatus 40.

The pre-removal descaling apparatus 40A removes scale formed on the surface of the steel material 1 before (immediately before) the steel material 1 is scarfed by the scarfing apparatus 30. Namely, in the fourth example modification, the pre-removal descaling process is performed after the rough rolling process and before the scarfing process (removal process).

Here, if scale or the like is adhering to the surface of the steel material 1 when the surface of the steel material 1 is scarfed by the scarfing apparatus 30, the combustion reaction between the scarfing oxygen 37 sprayed from the scarfing apparatus 30 (see FIG. 4) and the steel material 1 may be impeded and the scarfing of the steel material 1 may be interrupted. Particularly when stopping the depth to which the steel material 1 is scarfed by the scarfing apparatus 30 at about 1 mm to 2 mm, the scarfing of the steel material 1 by the scarfing apparatus 30 is likely to be interrupted.

By contrast, in the fourth example modification, as described above, scale adhering to the surface of the steel material 1 is removed by the pre-removal descaling apparatus 40A before the steel material 1 is scarfed by the scarfing apparatus 30. Because of this, the combustion reaction between the scarfing oxygen 37 sprayed from the scarfing apparatus 30 (see FIG. 4) and the steel material 1 tends to become stable. Consequently, an interruption or the like in the scarfing of the steel material 1 by the scarfing apparatus 30 can be inhibited.

Furthermore, the pre-removal descaling apparatus 40A removes scale adhering to the surface of the steel material 1 by spraying cooling water W onto the surface of the steel material 1. At this time, the surface of the steel material 1 is cooled by the cooling water W, so a Cu-rich layer is further inhibited from reforming on the steel material 1. Consequently, the occurrence of hot-shortness cracks in the steel material 1 is inhibited. Moreover, in the fourth example modification, the surface of the steel material 1 is cooled to less than 1100 °C by the pre-removal descaling apparatus 40A. Consequently, a Cu-rich layer is further inhibited from reforming on the steel material 1.

Furthermore, the post-removal descaling apparatus 40B is provided downstream of the scarfing apparatus 30 and upstream of the finish rolling apparatus 60 in the transport direction of the steel material 1. The basic configuration of the post-removal descaling apparatus 40B is the same as that of the descaling apparatus 40.

The post-removal descaling apparatus 40B removes scale and the like adhering to the surface of the steel material 1 after the surface of the steel material 1 has been scarfed by the scarfing device 30. Namely, in the fourth example modification, the post-removal descaling process is performed after the scarfing process (removal process) and before the finish rolling process.

In this way, because the post-removal descaling apparatus 40B removes scale and the like adhering to the surface of the steel material 1, the quality of the hot finish rolling of the steel material 1 by the finish rolling apparatus 60 can be improved.

Furthermore, when the scarfing apparatus 30 scarfs the steel material 1, the temperature of the surface of the steel material 1 rises (e.g., about 50 °C). By contrast, the post-removal descaling apparatus 40B removes scale adhering to the surface of the steel material 1 by spraying cooling water W onto the surface of the steel material 1. At this time, the surface of the steel material 1 is cooled by the cooling water W, so a Cu-rich layer is further inhibited from reforming on the steel material 1. Moreover, in the fourth example modification, the surface of the steel material 1 is cooled to less than 1100 °C by the post-removal descaling apparatus 40B.

Consequently, a Cu-rich layer is further inhibited from reforming on the steel material 1. As a result, the occurrence of hot-shortness cracks in the steel material 1 is inhibited.

It will be noted that in the fourth example modification the pre-removal descaling process, the scarfing process, and the post-removal descaling process are performed after the rough rolling process. However, the pre-removal descaling process, the scarfing process, and the post-removal descaling process may also be performed during the rough rolling process. In this case, for example, the pre-removal descaling apparatus 40A, the scarfing apparatus 30, and the post-removal descaling apparatus 40B are provided between the rolling mills 51, 52, 53, 54 that are adjacent to each other in the rough rolling apparatus 50.

Specifically, the pre-removal descaling apparatus 40A, the scarfing apparatus 30, and the post-removal descaling apparatus 40B are provided between the rolling mills 51, 52, between the rolling mills 52, 53, or between the rolling mills 53, 54.

Furthermore, in the fourth example modification, the pre-removal descaling process is performed before the scarfing process (removal process) and the post-removal descaling process is performed after the scarfing process (removal process). However, at least one of the pre-removal descaling process and the post-removal descaling process can be omitted.

<Second Embodiment>

In the first embodiment, an example was described where the target region T including the Cu-rich layer is removed from the steel material 1 by the scarfing apparatus 30, but the disclosure is not limited to this example. In a second embodiment, the target region T is removed from the steel material 1 by a cutting apparatus 90 instead of the scarfing apparatus 30. It will be noted that the cutting apparatus 90 is an example of a removal apparatus.

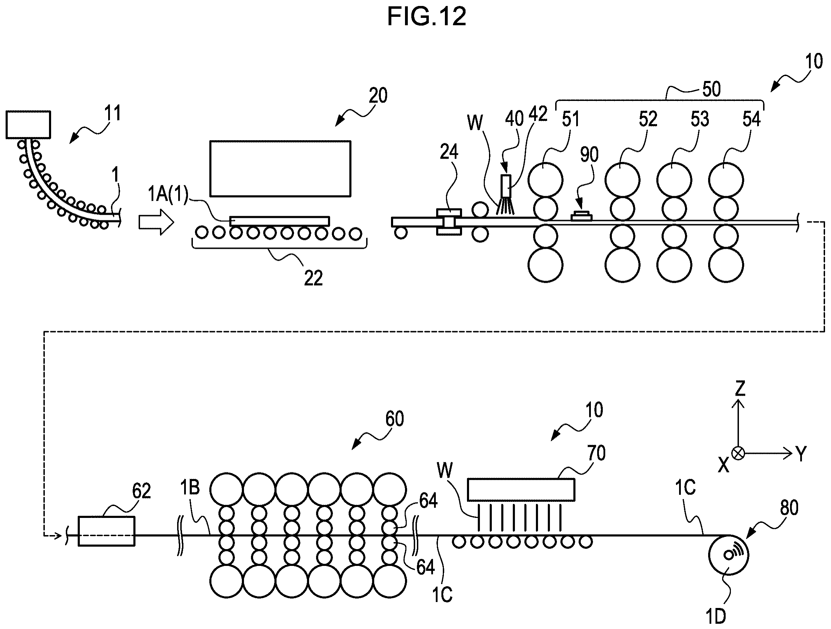

As shown in FIG. 12 as an example, the hot rolling equipment 10 includes the cutting apparatus 90 instead of the scarfing apparatus 30. The cutting apparatus 90 removes the surface part of the steel material 1 by cutting the steel material 1 discharged from the heating furnace 20. Details about the cutting apparatus 90 will be described further below. The cutting apparatus 90 is provided downstream of the rolling mill 51 located most upstream in the transport direction of the steel material 1 among the plurality of rolling mills 51 to 54 in the rough rolling apparatus 50. Moreover, the cutting apparatus 90 is provided upstream of the finish rolling apparatus 60 in the transport direction of the steel material 1. More specifically, the cutting apparatus 90 is provided between the rolling mill 51 provided most upstream and the rolling mill 52 provided in the second stage in the rough rolling apparatus 50 in the transport direction of the steel material 1. In other words, the cutting apparatus 90 is provided between the rolling mill 51 and the rolling mill 52 adjacent to the rolling mill 51.

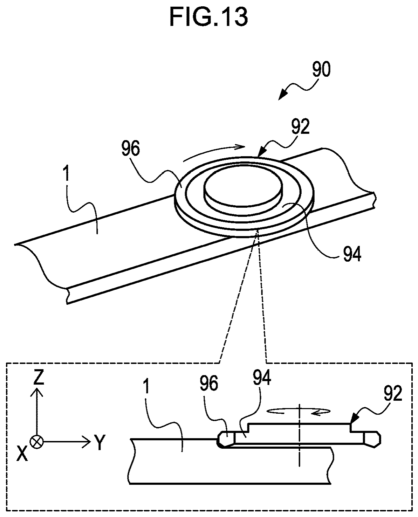

As shown in FIG. 13 as an example, the cutting apparatus 90 includes a rotary cutting tool 92. The rotary cutting tool 92 has a holder 94 and numerous cutting blades 96 attached to the outer peripheral edge portion of the holder 94. The rotary cutting tool 92 receives power from a power source (not shown in the drawings) and rotates. Additionally, the rotating cutting blades 96 come into contact with the surface of the steel material 1, whereby the surface of the steel material 1 is cut. In this way, the surface of the steel material 1 is cut by the cutting apparatus 90, whereby the target region T in the surface of the steel material 1 after it has been heated in the heating furnace 20 is removed.

It will be noted that although an example where the cutting apparatus 90 has the one rotary cutting tool 92 is described here, the disclosure is not limited to this example. For example, one surface of the steel material 1 may be cut by a plurality of the rotary cutting tools 92. Furthermore, the cutting apparatus 90 may include the rotary cutting tools 92 in positions opposing the surfaces of the steel material 1 on both sides in the thickness direction and the surfaces (side end faces) of the steel material 1 on both sides in the width direction.

As described above, in the hot rolling equipment 10 pertaining to the second embodiment, the target region T including the Cu-rich layer is removed from the steel material 1 by the cutting apparatus 90. Mechanical removal such as cutting is less likely to cause a deterioration in the surface texture of the steel material 1 (e.g., surface roughness) compared with removal by scarfing. Consequently, according to the present embodiment, a deterioration in the surface texture of the steel material 1 in the hot rolling process can be inhibited.

It will be noted that although in the second embodiment an example was described where the steel material 1 is cut by the cutting apparatus 90, the disclosure is not limited to this example. The removal apparatus is not limited to the cutting apparatus 90 and may, for example, use a mechanical removal method such as grinding using a grinding wheel apparatus.

<Third Embodiment>

In the first embodiment, an example was described where the heating furnace 20 is provided separately from the production line of the continuous casting machine 11 that continuously casts the steel material 1, but the disclosure is not limited to this example. In a third embodiment, the heating furnace 102 is provided on a production line of a continuous casting machine that continuously casts the steel material 1.

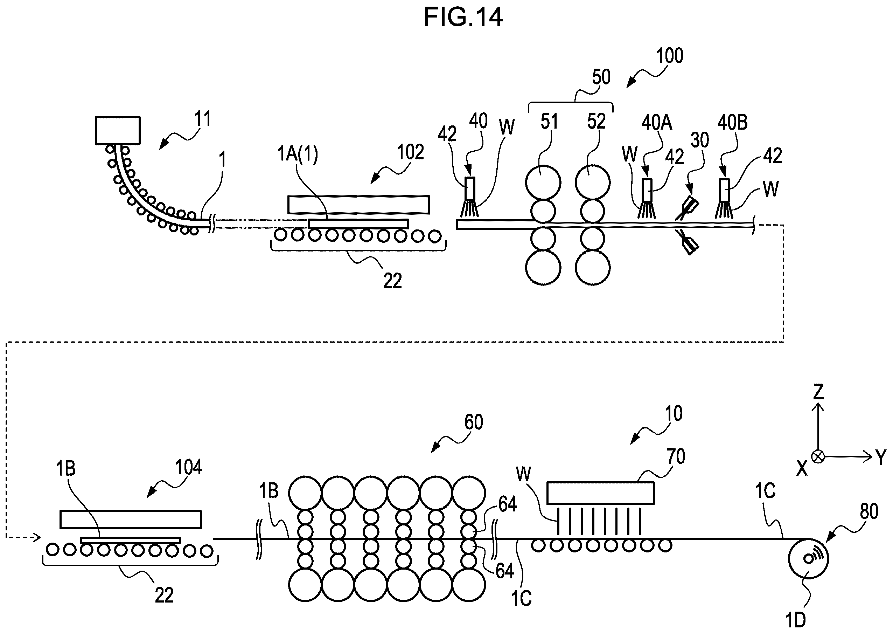

As shown in FIG. 14 as an example, the continuous casting machine 11 continuously casts a slab 1A that is thinner (e.g., 50 mm to 100 mm) than in the continuous casting machine 11 in the first embodiment. Hot rolling equipment 100 is provided on the production line of the continuous casting machine 11. Namely, the production line of the hot rolling equipment 100 is continuous with the production line of the continuous casting machine 11. The hot rolling equipment 100 includes a heating furnace 102, a descaling apparatus 40, a rough rolling apparatus 50, a pre-removal descaling apparatus 40A, a scarfing apparatus 30, a post-removal descaling apparatus 40B, a rough bar heating furnace 104, and a finish rolling apparatus 60. It will be noted that the rough rolling apparatus 50 of the third embodiment has, as an example, two rolling mills 51, 52.

The heating furnace 102 is, for example, a table heating furnace. Furthermore, the heating furnace 102 is provided upstream of the rough rolling apparatus 50 in the transport direction of the steel material 1. The heating furnace 102 heats to a predetermined temperature (1100 °C or higher) the steel material 1 (e.g., the slab 1A), which is obtained by cutting to a predetermined length the steel material 1 discharged from the continuous casting machine 11.

The rough bar heating furnace 104 is, for example, a table heating furnace. Furthermore, the rough bar heating furnace 104 is provided downstream of the rough rolling apparatus 50 and upstream of the finish rolling apparatus 60 in the transport direction of the steel material 1. The rough bar heating furnace 104 heats to a predetermined temperature (less than 1100 °C) the steel material 1 that has been rough rolled by the rough rolling apparatus 50.

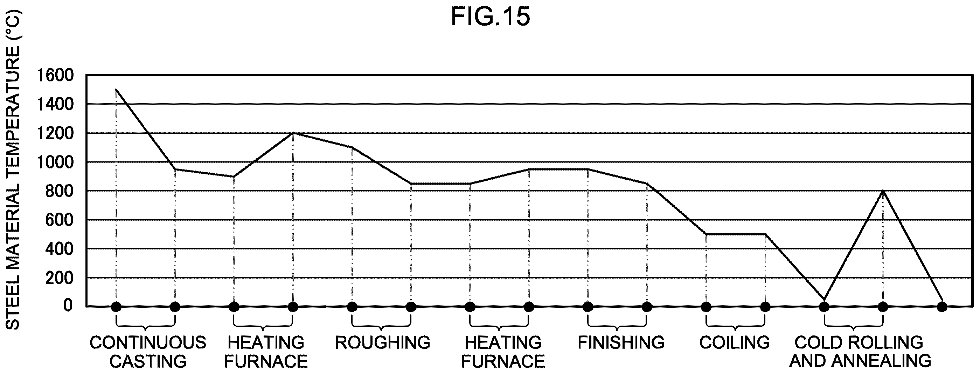

FIG. 15 shows an example of the thermal history of the steel material 1 in a series of processes of continuous casting, hot rolling, and cold rolling in the third embodiment. As shown in FIG. 15, at the start of continuous casting, the temperature of the steel material 1 is about 1500 °C. For that reason, scale forms on the surface of the steel material 1. On the other hand, the steel material 1 cools to 1000 °C or lower during the rough rolling process after leaving the heating furnace 20, and from then on its temperature does not rise to 1100 °C or higher. Consequently, in the third embodiment, the same effects as those of the first embodiment can be obtained.

EXAMPLES

In order to evaluate the performance of the hot rolling equipment 10 and the hot rolling method pertaining to the disclosure, an evaluation of the relationship between the depth of surface cracks in steel sheets (steel materials 1) and Cu concentrations in the steel sheets was conducted.

Specifically, as an Example, multiple steel sheets (steel materials 1) with different Cu contents were prepared. The multiple steel sheets all had C: 0.2 wt%, Si: 0.01 to 0.25 wt%, Mn: 0.5 wt%, T-Al: 0.03%, and Fr for the remainder, but Cu was set to 0.2 wt%, 0.5 wt%, 1 wt%, and 1.5 wt%, respectively. Then, each steel sheet was heated and held at 1100 °C or higher (1200 °C) and then stretched at a strain rate of 5/s to a cross-sectional area reduction ratio of 33%, which caused cracks in each steel sheet. Thereafter, 1 mm of the surface of each steel sheet was removed by scarfing. Multiple steel sheets pertaining to a Comparative Example were the same as the multiple steel sheets pertaining to the Example, except that their surfaces were not scarfed. Each steel sheet pertaining to the Example and the Comparative Example was cut, and the depth of surface cracks in each steel sheet was measured within the field of view by observing the cut surface. Then, the average value of the depths of the multiple surface cracks that were measured was then calculated for each steel sheet pertaining to the Example and the Comparative Example.

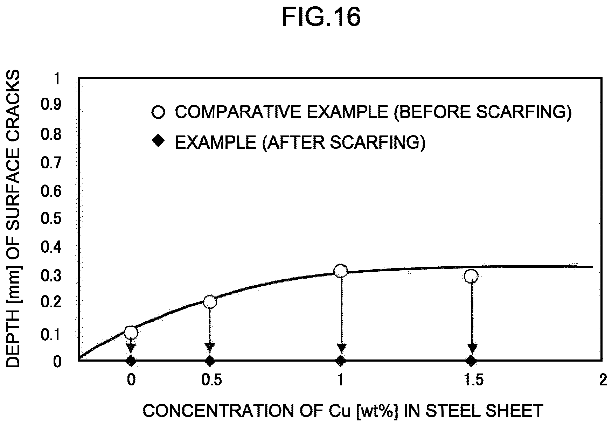

As shown in FIG. 16 as an example, in each steel sheet pertaining to the Comparative Example, cracks occurred in the surface of each steel sheet. That is, hot-shortness cracks occurred in each steel sheet in the temperature range near the temperature at the start of rough rolling (e.g., 1100 °C). Additionally, as the Cu concentration in the steel sheets increased, the depth of the surface cracks increased, and the Cu concentration phenomenon became more pronounced. However, even when the Cu concentrations in the steel sheets were high (e.g., 1 wt% or more), the depth of the surface cracks in the steel sheet was 1 mm or less. In each steel sheet pertaining to the Example, 1 mm of the surface was scarfed, whereby the surface cracks were removed so that the depth of the surface cracks became substantially zero. It was confirmed that hot-shortness cracks can be removed by scarfing the surfaces of the steel sheets in this way.

While preferred embodiments of the disclosure have been described in detail above with reference to the attached drawings, the present disclosure is not limited to these examples. It will be apparent that a variety of example changes or example applications within the category of the technical thought set forth in the claims may occur to a person of ordinary skill in the technical field to which the disclosure belongs, and it will be understood that these also naturally belong to the technical scope of the disclosure.

Furthermore, the disclosure of Japanese Patent Application No. 2023-054365 filed on March 29, 2023, is incorporated by reference herein in its entirety.

All documents, patent applications, and technical standards mentioned in this specification are incorporated herein by reference to the same extent as if each individual document, patent application, or technical standard were specifically and individually indicated to be incorporated by reference.

In addition to the above embodiments, the following addenda are also disclosed.

(Addendum 1)

Hot rolling equipment for hot rolling a steel material containing Cu, the hot rolling equipment comprising:

a heating furnace that heats the steel material to a predetermined temperature after continuously casting;

a rough rolling apparatus including a plurality of rolling mills that rough roll the steel material that has been heated in the heating furnace;

a finish rolling apparatus that finish rolls the steel material that has been rough rolled by the rough rolling apparatus; and

a removal apparatus that removes a target region including cracks caused by a Cu-rich layer that is present at a surface side of the steel material that is being rough rolled or has been rough rolled and in which a concentration of Cu components is higher than a concentration of Cu components in the base material,

wherein the removal apparatus is provided downstream of a rolling mill located furthest upstream in a transport direction among the plurality of rolling mills in the rough rolling apparatus and upstream of the finish rolling apparatus.

(Addendum 2)

The hot rolling equipment of addendum 1, wherein the removal apparatus is provided between one rolling mill and another rolling mill adjacent to the one rolling mill among the plurality of rolling mills in the rough rolling apparatus.

(Addendum 3)

The hot rolling equipment of addendum 2, wherein the removal apparatus is provided after the rolling mill located furthest upstream in the transport direction among the plurality of rolling mills in the rough rolling apparatus.

(Addendum 4)

The hot rolling equipment of addendum 1, wherein the removal apparatus is provided downstream of the rough rolling apparatus in the transport direction and upstream of the finish rolling apparatus in the transport direction.

(Addendum 5)

The hot rolling equipment of any one of addendum 1 to addendum 4, wherein the removal apparatus removes the target region by scarfing.

(Addendum 6)

The hot rolling equipment of any one of addendum 1 to addendum 4, wherein the removal apparatus removes the target region by mechanical removal.

(Addendum 7)

A hot rolling method for hot rolling a steel material containing Cu, the hot rolling method comprising:

a heating process that heats the steel material to a predetermined temperature after continuously casting;

a rough rolling process that performs a plurality of rough rolling passes on the steel material that has been heated in the heating process;

a finish rolling process that performs finish rolling on the steel material that has been rough rolled in the rough rolling process; and

a removal process that removes a target region including cracks caused by a Cu-rich layer that is present at a surface side of the steel material that is being rough rolled or has been rough rolled and in which a concentration of Cu components is higher than a concentration of Cu components in a base material,

wherein the removal process is performed after the first rolling pass among the plurality of rough rolling passes and before the finish rolling process.

(Addendum 8)

The hot rolling method of addendum 7, wherein the removal process is performed with the temperature of the surface of the steel material that is being rough rolled or has been rough rolled being 1000 °C or lower.

(Addendum 9)

The hot rolling method of addendum 7 or addendum 8, wherein when the removal of the target region is performed by scarfing in the removal process, the transport velocity of the steel material that is being rough rolled or has been rough rolled is set to 20 m/min or higher.

(Addendum 10)

The hot rolling method of any one of addendum 7 to addendum 9, wherein the target region is a region of 1 mm or less in the thickness direction from the surface of the steel material that is being rough rolled or has been rough rolled.

**Claims**

1. Hot rolling equipment for hot rolling a steel material containing Cu, the hot rolling equipment comprising:

   a heating furnace that heats the steel material to a predetermined temperature after casting;
   a rough rolling apparatus including a plurality of rolling mills that rough roll the steel material that has been heated in the heating furnace;
   a finish rolling apparatus that finish rolls the steel material that has been rough rolled by the rough rolling apparatus; and
   a removal apparatus that removes a target region including cracks caused by a Cu-rich layer that is present at a surface side of the steel material that is being rough rolled or has been rough rolled and in which a concentration of Cu components is higher than a concentration of Cu components in a base material of the steel material,
   wherein the removal apparatus is provided downstream of a rolling mill located furthest upstream among the plurality of rolling mills in the rough rolling apparatus in a transport direction of the steel material and upstream of the finish rolling apparatus.

2. The hot rolling equipment of claim 1, wherein the hot rolling equipment includes a post-removal descaling apparatus that is provided downstream of the removal apparatus and upstream of the finish rolling apparatus in the transport direction of the steel material and that descales the steel material using cooling water.

3. The hot rolling equipment of claim 1 or claim 2, wherein the hot rolling equipment includes a pre-removal descaling apparatus that is provided between the removal apparatus and a rolling mill located upstream of, and adjacent to, the removal apparatus in the transport direction of the steel material among the plurality of rolling mills in the rough rolling apparatus and that descales the steel material using cooling water.

4. The hot rolling equipment of any one of claim 1 to claim 3, wherein the removal apparatus is provided between one rolling mill and another rolling mill adjacent to the one rolling mill among the plurality of rolling mills in the rough rolling apparatus.

5. The hot rolling equipment of claim 4, wherein the removal apparatus is provided after the rolling mill located furthest upstream among the plurality of rolling mills in the rough rolling apparatus in the transport direction of the steel material.

6. The hot rolling equipment of any one of claim 1 to claim 3, wherein the removal apparatus is provided downstream of the rough rolling apparatus and upstream of the finish rolling apparatus in the transport direction of the steel material.

7. The hot rolling equipment of any one of claim 1 to claim 6, wherein the removal apparatus removes the target region from the steel material by scarfing or removes the target region from the steel material by mechanical removal.

8. The hot rolling equipment of any one of claim 1 to claim 7, wherein the heating furnace is provided separately from a production line of a casting machine that casts the steel material.

9. The hot rolling equipment of any one of claim 1 to claim 7, wherein the heating furnace is provided on a production line of a casting machine that casts the steel material.

10. A hot rolling method for hot rolling a steel material containing Cu, the hot rolling method comprising:

a heating process that heats the steel material to a predetermined temperature after casting;
a rough rolling process that performs a plurality of rough rolling passes on the steel material that has been heated in the heating process;
a finish rolling process that performs finish rolling on the steel material that has been rough rolled in the rough rolling process; and
a removal process that removes a target region including cracks caused by a Cu-rich layer that is present at a surface side of the steel material that is being rough rolled or has been rough rolled and in which a concentration of Cu components is higher than a concentration of Cu components in a base material of the steel material,
wherein the removal process is performed after a first rough rolling pass among the plurality of rough rolling passes and before the finish rolling process.

11. The hot rolling method of claim 10, further comprising a post-removal descaling process that descales the steel material using cooling water after the removal process and before the finish rolling process.

12. The hot rolling method of claim 10 or claim 11, further comprising a pre-removal descaling process that descales the steel material using cooling water after a rolling pass that comes immediately before the removal process among the plurality of rough rolling passes and before the removal process.

13. The hot rolling method of any one of claim 10 to claim 12, wherein the removal process is performed with a temperature of the surface of the steel material that is being rough rolled or has been rough rolled being 1000°C or lower.

14. The hot rolling method of any one of claim 10 to claim 13, wherein, when the removal of the target region is performed by scarfing in the removal process, a transport velocity of the steel material that is being rough rolled or has been rough rolled is 20 m/min or higher.

15. The hot rolling method of any one of claim 10 to claim 14, wherein the target region is a region of 1 mm or less in a thickness direction from a surface of the steel material that is being rough rolled or has been rough rolled.

EP 4 691 660 A1

# FIG.1

FIG.2

# FIG.3

# FIG.4

FIG.5

# FIG.6

```
        ┌──────────────┐
        │    START     │
        └──────┬───────┘
               │
┌──────────────────────────────────────┐
│ HEAT STEEL MATERIAL IN HEATING FURNACE│─── ST10
└──────────────────┬───────────────────┘
                   │
┌──────────────────────────────────────┐
│      DESCALE WITH COOLING WATER       │─── ST12
└──────────────────┬───────────────────┘
                   │
┌──────────────────────────────────────┐
│      START ROUGHING STEEL MATERIAL    │─── ST14
└──────────────────┬───────────────────┘
                   │
┌──────────────────────────────────────┐
│ REMOVE TARGET REGION OF STEEL MATERIAL│─── ST16
│       SURFACE WITH SCARFING           │
└──────────────────┬───────────────────┘
                   │
┌──────────────────────────────────────┐
│          END OF ROUGHING              │─── ST18
└──────────────────┬───────────────────┘
                   │
┌──────────────────────────────────────┐
│        FINISH STEEL MATERIAL          │─── ST20
└──────────────────┬───────────────────┘
                   │
┌──────────────────────────────────────┐
│              COILING                  │─── ST22
└──────────────────┬───────────────────┘
                   │
        ┌──────────────┐
        │     END      │
        └──────────────┘
```

# FIG.7

# FIG.8

## FIG.9

51B 30 52B 53B 54B 50B

FIG.10

EP 4 691 660 A1

# FIG.11

# FIG.12

EP 4 691 660 A1

# FIG.13

FIG.14

EP 4 691 660 A1

# FIG.15

STEEL MATERIAL TEMPERATURE (°C)

CONTINUOUS CASTING · HEATING FURNACE · ROUGHING · HEATING FURNACE · FINISHING · COILING · COLD ROLLING AND ANNEALING

# FIG.16

## INTERNATIONAL SEARCH REPORT

| International application No. |
| --- |
| **PCT/JP2024/012448** |

### A. CLASSIFICATION OF SUBJECT MATTER

***B21B 45/02***(2006.01)i; ***B21B 1/26***(2006.01)i; ***B23K 7/06***(2006.01)i; ***B23P 23/04***(2006.01)i; ***C22C 38/00***(2006.01)i; ***C22C 38/16***(2006.01)i
FI: B21B45/02 330; B21B1/26 Z; B23K7/06 A; B23P23/04; C22C38/00 301W; C22C38/16

According to International Patent Classification (IPC) or to both national classification and IPC

### B. FIELDS SEARCHED

Minimum documentation searched (classification system followed by classification symbols)
B21B1/00-99/00; B23K7/00-7/10; B23P23/04; C22C38/00-38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 6-279923 A (SUMITOMO METAL INDUSTRIES, LTD.) 04 October 1994 (1994-10-04) | 1-15 |
| A | JP 6-304639 A (NIPPON STEEL CORPORATION) 01 November 1994 (1994-11-01) | 1-15 |
| A | JP 6-346145 A (SUMITOMO METAL INDUSTRIES, LTD.) 20 December 1994 (1994-12-20) | 1-15 |
| A | JP 2004-148365 A (JFE STEEL CORPORATION) 27 May 2004 (2004-05-27) | 1-15 |
| A | CN 102644031 A (WUHAN IRON & STEEL (GROUP) CORP.) 22 August 2012 (2012-08-22) | 1-15 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **07 June 2024** | **18 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012448**

| Patent document cited in search report | | | Publication date (day/month/year) | Patent family member(s) | Publication date (day/month/year) |
|---|---|---|---|---|---|
| JP | 6-279923 | A | 04 October 1994 | (Family: none) | |
| JP | 6-304639 | A | 01 November 1994 | (Family: none) | |
| JP | 6-346145 | A | 20 December 1994 | (Family: none) | |
| JP | 2004-148365 | A | 27 May 2004 | (Family: none) | |
| CN | 102644031 | A | 22 August 2012 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7242938 A
- JP H6297026 A
- JP 2005029886 A
- JP 2023054365 A